**Europäisches Patentamt**

**European Patent Office**

**Office européen des brevets**

(19)

(11) Veröffentlichungsnummer: **0 149 994**
**B1**

(12) **EUROPÄISCHE PATENTSCHRIFT**

(45) Veröffentlichungstag der Patentschrift:
**02.11.88**

(51) Int. Cl.⁴: **B 23 B 29/24**

(21) Anmeldenummer: **85100052.1**

(22) Anmeldetag: **02.01.85**

(54) Abschälwerkzeug für Standardbolzen.

(30) Priorität: **23.01.84  DE 3402173**

(43) Veröffentlichungstag der Anmeldung:
**31.07.85 Patentblatt 85/31**

(45) Bekanntmachung des Hinweises auf die Patenterteilung:
**02.11.88 Patentblatt 88/44**

(84) Benannte Vertragsstaaten:
**CH DE FR GB IT LI NL**

(56) Entgegenhaltungen:
**EP-A-0 012 154**
**DE-C-378 739**
**FR-A-2 117 036**
**GB-A-894 485**

(73) Patentinhaber: **Max- Planck- Gesellschaft zur Förderung der Wissenschaften e.V., Bunsenstrasse 10, D-3400 Göttingen (DE)**

(72) Erfinder: **Kotzlowski, Heinz Ernst, Moarstrasse 18, D-8045 Ismaning (DE)**

(74) Vertreter: **von Bezold, Dieter, Dr., Dr. Dieter von Bezold Dipl.- Ing. Peter Schütz Dipl.- Ing. Wolfgang Heusler Brienner Strasse 52, D-8000 München 2 (DE)**

EP 0 149 994 B1

LIBER, STOCKHOLM 1988

**Beschreibung**

Die Erfindung betrifft ein Werkzeug zur spanenden Bearbeitung zylindrischer Oberflächen eines Werkstücks. Insbesondere betrifft die Erfindung ein Abschälwerkzeug zum Entfernen eines Schweißwulstes, der beim stumpfen Anschweißen eines zylindrischen Bolzens an einer Trägerfläche entsteht. Das vorliegende Werkzeug eignet sich insbesondere für sog. Standardbolzen, d.h. Bolzen, deren Anschweißdurchmesser kleiner oder gleich dem Bolzendurchmesser ist.

Aus DE-C-3 131 055 ist ein rotierendes Fräswerkzeug bekannt, das mehrere zur Drehachse symmetrisch angeordnete Drehmeißel aufweist und beispielsweise von einer Handbohrmaschine angetrieben wird. Mit diesem Werkzeug können Bolzen, die am angeschweißten Ende den größten Durchmesser haben, sowie die Schweißnaht gesäubert werden. Die Drehmeißel können radial verstellt werden, diese Verstellung erfolgt jedoch vor dem Betrieb, eine kontinuierliche Verstellung während des Betriebes ist nicht möglich. Daher ist dieses Werkzeug zur Bearbeitung von Bolzen, deren angeschweißtes Ende ("Schweißende") einen kleineren Durchmesser als der Bolzenschaft oder das Bolzengewinde aufweist, ungeeignet.

Aus DE-B-1 149 587, von der die Erfindung ausgeht, ist eine Schälmaschine bekannt, bei der die Schneidmesser während des Betriebes so verstellt werden, daß sich eine gleichbleibende Schnittiefe ergibt. Die Schneidmesser sind an radial verschiebbaren Halterungen befestigt, die durch Druckfedern nach außen vorgespannt sind und durch eine axial verschiebbare Muffe mit konischer Innenfläche gegen das Werkstück gedrückt werden. Die Muffe läuft mit den Messerhalterungen um und ist über ein Drehlager mit einem am Maschinenrahmen verschiebbar gelagerten Schubglied gekoppelt, das durch eine Tastvorrichtung betätigt wird. Die Konstruktion der bekannten Maschine ist nicht für ein von Hand geführtes und z. B. durch eine Handbohrmaschine angetriebenes Werkzeug geeignet, das leicht sowie unkompliziert sein und sich bezüglich des Werkstücks selbsttätig zentrieren muß.

Aus DE-B-1 289 721 ist eine Wellenschälmaschine bekannt, die einen rotierenden Messerkopf und eine Verstellvorrichtung zur radialen Verstellung der Schälmesser enthält, die voneinander getrennt am Maschinenrahmen angebracht sind.

Aus DE-A-2 211 900 ist eine Vorrichtung zum Drehen eines Werkstückes bekannt, bei der Messerhalter linear schräg zur Rotationsachse über zweiarmige Schwenkhebel verstellbar sind, deren Drehpunkte beim Schwenken wandern, sodaß sich ein großer Hub ergibt.

Aus DE-C-2 738 402 ist ein umlaufender Werkzeugkopf bekannt bei dem die Messerhalter radial zur Rotationsachse über zweiarmige Hebel linear verstellbar sind.

Aus DE-A-1 652 693 ist eine Drehstahlanordnung eines umlaufenden Messerkopfes eines Drehautomaten bekannt, bei der die Drehstähle in Halterungen gehaltert sind, welche um parallel zur Rotationsachse des Messerkopfes verlaufende Achsen schwenkbar sind. Auf die Verstellvorrichtung selbst wird nicht eingegangen.

Aufgabe der vorliegenden Erfindung ist es daher, ein Fräswerkzeug zu schaffen, das leicht sowie einfach aufgebaut ist, manuell bedienbar ist und auch bei Werkstücken verwendet werden kann, die an einigen Stellen so verdickt sind, daß das Ansetzen konventioneller Fräswerkzeuge nicht möglich ist. Insbesondere soll das Fraswerkzeug zum Abschälen und zur Reinigung von Schweißbolzen, deren Durchmesser am freien Ende größer als am angeschweißten Ende ist, angewendet werden können. Weitere Aufgaben der Erfindung ergeben sich aus den in der Beschreibung genannten Vorteilen der Erfindung.

Diese Aufgaben werden durch das im Anspruch 1 gekennzeichnete Werkzeug gelöst. Vorteilhafte Weiterbildungen und Ausführungsarten sind Gegenstand von Unteransprüchen.

Das erfindungsgemäße Werkzeug enthält also einen Messerkopf, der über eine Messerkopfhalterung mit einem Drehantrieb verbunden wird. Die Drehmeißel sind einstellbar an Haltern befestigt, die wiederum so mit dem Messerkopf verbunden sind, daß sie einerseits die Rotation des Messerkopfes auf die Drehmeißel übertragen, andererseits aber auch eine radiale Verstellung der Drehmeißel ermöglichen. Zwar ist das Einsetzen der Drehmeißel in die Halter nur bei Stillstand des Messerkopfes möglich, die Verstellung der Halter und der in ihnen befestigten Drehmeißel erfolgt über eine Verstellvorrichtung, die es gestattet, die Halter und damit auch die Schneiden der Drehmeißel, während der Messerkopf rotiert, von einer radial nach außen geschwenkten Stellung, in der das Werkzeug bequem über die nicht abzudrehenden Teile, wie das Gewinde, des Bolzens o. dgl. geführt werden kann, in eine durch einen Anschlag und die Position der Drehmeißel in ihren Haltern bestimmte Arbeitsposition zu schwenken. Die Verstellvorrichtung kann manuell mit einer Hand bedient werden, so daß der gesamte Abschälvorgang von einer Bedienungsperson ausgeführt werden kann.

Das erfindungsgemäße Werkzeug erlaubt nicht nur die Entfernung des Schweißwulstes eines angeschweißten Bolzens, sondern ist auch bei der Bearbeitung anderer zylinderförmiger Werkstücke anwendbar. Z. B. kann mit ihm eine Lötstelle eines stiftförmigen Bauteiles gesäubert, der beim Stumpf- oder Reibschweißen entstehende Schweißgrat entfernt, Rillen in zylindrische Flächen eingebracht, zylindrische Flächen entgratet sowie durch Abschälen einer dünnen Schicht gesäubert oder nachbearbeitet werden, und schließlich kann der Schweißwulst von Kopfbolzendübeln und Betonankern entfernt werden. Da das Werkzeug mit einer Handbohrmaschine angetrieben und von einer Bedienungsperson allein bedient werden kann, ist es auch an schwer zugänglichen Stellen einsetzbar. Größe und Form des Werkzeugs sowie der Drehmeißel lassen sich bei dem erfindungsgemäßen Werkzeug leicht den Erfordernissen anpassen.

Im folgenden wird ein Ausführungsbeispiel der Erfindung unter Bezugnahme auf die Zeichnungen näher erläutert.

Es zeigen:

Fig. 1 eine in Richtung einer Drehachse gesehene, teilweise geschnittene Ansicht eines unteren Endes eines Werkzeuges gemäß einer Ausführungsform der Erfindung;

Fig. 2 einen Axialschnitt des Werkzeugs gem. Fig. 1,

Fig. 3 eine in Richtung der Drehachse gesehene Ansicht des Werkzeugs gemäß Fig. 1 und 2 von oben, und

Fig. 4 einen Axialschnitt einer Vorrichtung zum Verbinden mit einem Rotationsantrieb in Form eines Bohrfutterkegels.

Das in der Zeichnung dargestellte Abschälwerkzeug für Bolzen und dergl. enthält einen Messerkopf 10 mit einem näherungsweise hohlzylinderförmigen Körper 12, der oben eine integrale Gewindehülse 14 und unten einen eine nach unten offene, zylindrische Höhlung oder Ausnehmung 16 bildet. Der Messerkopf 10 enthält ferner ein Antriebsteil 18, das drehsteif mit dem Körper 12 verbunden ist und zu diesem Zwecke am unteren Ende einen in die Gewindehülse 14 eingeschraubten Gewindezapfen aufweist. Am anderen Ende bildet das Antriebsteil 18 einen Wellenstummel 22 und in einem mittleren Bereich einen ringförmigen Flansch 24.

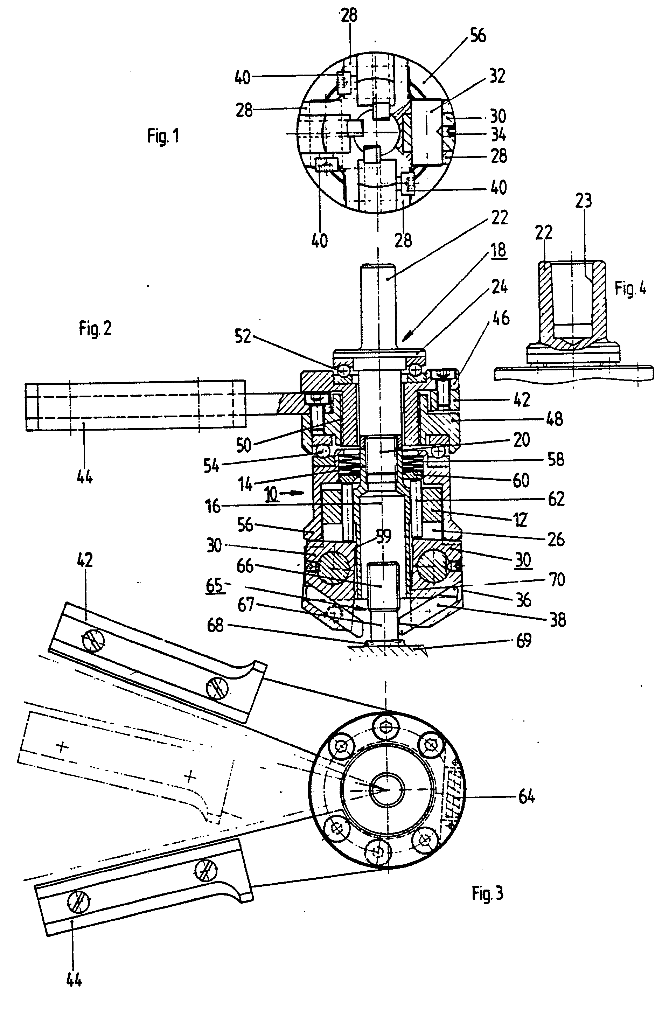

Der die Ausnehmung 16 umgebende untere Teil des Körpers 12 bildet vier um 90 Grad gegeneinander versetzte, nach außen vorspringende gabelartige Halterungsteile 28, wie insbesondere aus Fig. 1 ersichtlich ist. Die Halterungsteile bilden jeweils einen axialen Schlitz zur Aufnahme einer Drehmeißelhalterung 30 und weisen jeweils eine tangentiale Bohrung zur Aufnahme eines Lagerbolzens 32 auf, der bezüglich der zugehörigen Drehmeißelhalterung 30 durch eine Madenschraube 34 fixiert ist. Die Drehmeißelhalterungen 30 weisen jeweils eine schräg nach unten verlaufende Aussparung 36 zur Aufnahme eines Drehmeißels 38 auf. Die Drehmeißel 38 sind bezüglich der Drehmeißelhalterung 30 durch eine Klemmschraube 40 verstellbar fixiert.

Um die Schneiden der Drehmeißel 38 bei rotierendem Messerkopf radial verstellen zu können, ist eine Verstellvorrichtung vorgesehen, die mittels zweier Handgriffe 42 und 44 betätigbar ist, die mit einem oberen bzw. unteren Gewindeflansch 46 bzw. 48 durch Schrauben verbunden sind. Die Gewindeflansche 46, 48 sind über eine Gewindeanordnung 50 miteinander gekoppelt, die durch ein Außengewinde an einem hülsenförmigen, nach unten reichenden Ansatz des Flansches 46 und ein entsprechendes Innengewinde im Flansch 48 gebildet wird.

Der mit dem Handgriff 42 gekoppelte Gewindeflansch 46 ist über ein Axialkugellager 52 drehbar auf dem Flansch 24 abgestützt, während der mit dem Handgriff 44 verbundene untere Gewindeflansch 48 sich über ein zweites Axialkugellager 54 auf dem oberen Ende einer Schubhülse 56 abstützt, die axial verschiebbar auf dem Körper 12 gelagert ist und sich mit ihrem unteren Ende auf äußeren Teilen der Drehmeißelhalterungen 30 abstützt. Die Drehmeißelhalterungen werden durch ringförmige Tellerfedern 58 in die geöffnete Stellung (Fig. 2 links), in der sie mit oberen inneren Anschlagnasen 59 am Grund der Ausnehmungen 26 anliegen, vorgespannt. Die Tellerfedern 58 sind zwischen einem nach innen vorspringenden Flanschteil am oberen Ende der Schubhülse 56 und einem die Gewindehülse 14 umgebenden Zwischenring 60 gelagert. Zwischen dem Zwischenring 60 und jeder Drehmeißelhalterung 30 ist ein Stift 62 vorgesehen, der in einer axialen Bohrung im Körper 12 verschiebbar gelagert ist und die Kraft der Tellerfedern auf einen radial inneren Teil der zugehörigen Drehmeißelhalterung 30 überträgt, so daß diese in diejenige Stellung vorgespannt wird, bei der die Drehmeißel nach außen geschwenkt sind (Fig. 2 links).

Die Griffe 42, 44 werden durch eine mit den Flanschen 46, 48 verbundene Zugfeder 64 in die in Fig. 3 ausgezogen gezeichnete gespreizte Stellung vorgespannt. Beim Zusammendrücken bzw. Freigeben der Griffe 42, 44 führen die Flansche eine Axialbewegung entsprechend der Steigung des Gewindes 50 aus, die über die Schubhülse 56 in eine entsprechende Schwenkbewegung der Drehmeißelhalter 30 und damit in eine radiale Verstellung der Schneiden der Drehmeißel umgesetzt wird. In der nach innen geschwenkten Stellung liegen die Drehmeißelhalter 30 am Grund 70 der Schlitze 26 an und die Schneiden der Drehmeißel stehen über den Umfang der Ausnehmung 16 nach innen um einen Betrag vor, der durch die anfängliche Positionierung der Drehmeißel in den Drehmeißelhaltern bestimmt wird.

Der Messerkopf 10 enthält mindestens drei, vorzugsweise vier, symmetrisch um die Drehachsae verteilte Drehmeißel, so daß sich das Werkzeug selbsttätig auf dem Werkstück zentriert.

Die beschriebene Anordnung ermöglicht eine Drehung des Messerkopfes 10 einschließlich der Schubhülse 56 und der Spreizvorrichtung 58, 60, 62 bezüglich der Gewindeflansche 46, 48 und der mit ihnen verbundenen Handgriffe 42, 44, so daß die radiale Anstellung der Schneiden der Drehmeißel 38 auch im Betrieb, d.h. bei rotierendem Messerkopf möglich ist.

Die Schneiden der Drehmeißel 38 sind zweckmäßigerweise so ausgebildet, daß sowohl eine radiale als auch eine axiale Bearbeitung des Bolzens 65 oder anderen Werkstücks möglich ist. Sie haben vorzugsweise ein abgerundetes Vorderende, an das sich (gesehen in der nach innen geschwenkten Position) außen ein im wesentlichen radial nach außen und hinten verlaufender gerader Schneidenteil und innen eine geringfügig (wenige Zehntel Millimeter) zurückversetzte, im wesentlichen parallel zur Rotationsachse verlaufende Fläche anschließen. Die Fläche schneidet nicht, sondern liegt am Werkstück an und trägt dadurch zur Selbstzentrierung bei.

Als Beispiel für die Verwendung des beschriebenen Werkzeugs ist in Fig. 2 die Bearbeitung eines Bolzens 65 mit einem Gewindebereich 66, einem Anschweißbereich 67 und einem durch Verschweißen mit einem Werkstück 69 entstandenen Schweißwulst 68 dargestellt. Zur Entfernung des Schweißwulstes wird das Abschälwerkzeug zunächst mit seinem Spannzapfen 22 im Spannfutter einer Bohrmaschine eingespannt und über den angeschweißten Bolzen geführt, bis sich die Drehmeißel 38 nahe dem Schweißwulst 68 befinden. Die Drehmeißel 38 sind nach außen geschwenkt, die Drehmeißelhalter liegen mit ihren oberen Enden am Grund der Ausnehmungen 26 an (Fig. 2, linke Seite). Die Griffe 42, 44 werden dann mit einer Hand zangenartig bis zum leichten Anschlag zusammengezogen, die Bohrmaschine wird auf eine Drehzahl von etwa 100 U/min eingestellt, eingeschaltet und dann axial zum Bolzen bewegt. Wenn ein leichter Drehwiderstand bemerkbar wird, werden die Griffe 42 und 44 fest zusammengezogen, so daß die unteren Teile der Drehmeißelhalterung am Grund der Schlitze 26 (bei 70 in Fig. 2) anliegen, und wird der Andruck in axialer Richtung erhöht.

Bei zähen Werkstoffen ist eine wiederholte Bestimmung der Tiefe der Abschälnut im Werkstück notwendig. Das hierzu erforderliche Absetzen und erneute Ansetzen des Werkzeugs ist mit dem erfindungsgemäßen Werkzeug einfach und leicht durchführbar. Das erfindungsgemäße Abschälwerkzeug kann nicht nur in Verbindung mit einer Handbohrmaschine als Handwerkszeug eingesetzt werden, sondern auch in einer Standbohrmaschine oder Fräsmaschine fest installiert werden.

Fig. 4 zeigt eine Verbindungs- oder Anschlußvorrichtung für einen Drehantrieb, die einen Bohrfutterkegel 23 aufweist und anstelle des in Fig. 2 dargestellten einfachen Spannzapfens 22 verwendet werden kann.

**Patentansprüche**

1. Werkzeug zur spanenden Bearbeitung zylindrischer Oberflächen eines Werkstücks, insbesondere zur Entfernung eines schweißwulstess (68), von an einem Ende angeschweißten Bolzen (65), mit
- einem an einen Drehantrieb koppelbaren Messerkopf (10), der einen Körper (12) mit einer Ausnehmung (16) zur Aufnahme des Werkstücks aufweist,
- Drehmeißelhalterungen (30), die zur radialen Verstellung von in ihnen gehaltenen Drehmeißeln (38) beweglich am Körper (12) des Messerkopfs (10) gelagert sind, und
- einer Verstellvorrichtung, die einen feststehenden Betätigungsteil (42, 44, 46, 48) und einen mit diesem drehbar gekoppelten, mit dem Messerkopf (10) rotierenden Verstellteil (56, 58, 60, 62) mit einem auf die Drehmeißelhalterungen (30) einwirkenden Schubglied (56) aufweist,
<u>dadurch gekennzeichnet,</u>
- daß die Drehmeißelhalterungen (30) um tangential zur Drehachse des Messerkopfs (10) verlaufende Schwenkachsen (32) gelagert sind,
- daß der Betätigungsteil (42, 44, 46, 48) der Verstellvorrichtung zwei ringförmige Bauteile (46, 48) enthält, die gegeneinander verdrehbar über ein Gewinde (50) gekoppelt und jeweils mit einem Betätigungsglied (42, 44) versehen sind,
- daß der erste ringförmige Bauteil (46) über ein erstes Drehlager (52) gegen den Körper (12) des Messerkopfes (10) abgestützt ist, und
- daß das zweite ringförmige Bauteil (48) über ein zweites Drehlager (54) auf das Schubglied (56) einwirkt, das an den Drehmeißelhaltern (30) exzentrisch bezüglich der Schwenkachsen (32) angreift.

2. Werkzeug nach Anspruch 1, dadurch gekennzeichnet, daß das Schubglied (56) ein hülsenartiges Bauteil ist und an radial außerhalb der Schwenkachsen gelegenen Teilen der Drehmeißelhalterungen (30) anliegt, und daß die Drehmeißelhalterungen mit einer Spreizvorrichtung (58, 60, 62) versehen sind, die die Drehmeißelhalterungen in eine Stellung vorspannt, in der die Schneiden der Drehmeißel (38) eine von der Drehachse entfernte Endstellung einnehmen.

3. Werkzeug nach Anspruch 2, dadurch gekennzeichnet, daß die Spreizvorrichtungen eine Druckfederanordnung (58) enthält, welche jeweils über einen axial verlaufenden Stift (62) auf einen radial innerhalb der Drehmeißelhalterung-Schwenkachse gelegenen Teil jeder Drehmeißelhalterung (30) wirkt.

4. Werkzeug nach Anspruch 1, 2 oder 3, dadurch gekennzeichnet, daß die Drehmeißel (38) in den Drehmeißelhalterungen (30) so gehalten sind, daß sie mit ihrer Längsrichtung jeweils im wesentlichen in Ebenen liegen, die die Rotationsachse enthalten, sowie schräg zu dieser verlaufen und daß sie in der radial nach innen geschwenkten Stellung der Drehmeißelhalterungen mit ihren Schneiden über den Umfang der Ausnehmung (16) nach innen reichen.

5. Werkzeug nach einem der Ansprüche 1 bis 4, dadurch gekennzeichnet, daß der Körper (12) an seinem den Drehmeißelhalterungen (30) abgewandten Ende eine Gewindehülse (14) aufweist, in die ein Gewindezapfen (20) der Vorrichtung (22) zum Verbinden mit dem Rotationsantrieb eingeschraubt ist.

6. Werkzeug nach einem der vorhergehenden Ansprüche, dadurch gekennzeichnet, daß die Drehmeißel (38) in ihrer Längsrichtung verschiebbar in den Drehmeißelhalterungen gehaltert sind.

7. Werkzeug nach einem der vorhergehenden Ansprüche, gekennzeichnet durch mindestens drei, vorzugsweise vier, Drehmeißelhalterungen (30), die symmetrisch um die Rotationsachse des Messerkopfes verteilt angeordnet sind.

8. Werkzeug nach einem der vorhergehenden Ansprüche, dadurch gekennzeichnet, daß die Vorrichtung (22) zum Verbinden mit einem Rotationsantrieb als Spannzapfen (22) oder Bohrfutterkegel (23) ausgebildet ist.

9. Werkzeug nach einem der vorhergehenden Ansprüche, dadurch gekennzeichnet, daß die Schneiden der Drehmeißel abgerundete Vorderenden aufweisen, an die sich, gesehen bei nach innen geschwenkten Drehmeißelhalterungen, außen ein schräg zur Rotationsachse und nach hinten verlaufender Schneidenteil und innen eine Fläche, die im wesentlichen parallel zur Rotationsachse verläuft, anschließen.

## Claims

1. A tool for machining cylindrical surfaces of a workpiece, more particularly for removing a weld bead (68) from bolts (65) welded at one end, comprising:
- a cutter head (10) for coupling to a rotary drive and comprising a body (12) having a recess (16) for receiving the workpiece,
- turning-tool holders (30) mounted so that the turning tools (38) held in them can be radially adjusted in a movable manner on the body (12) of the cutter head (10), and
- an adjusting device comprising a stationary actuating part (42, 44, 46, 48) and a rotating adjusting part (56, 58, 60, 62) rotating with the cutter head (10) and rotatably coupled to the actuating part, with a thrust member (56) acting on the turning-tool holders (30),
characterised in that
- the turning-tool holders (30) are mounted on pivot axes (32) extending at a tangent to the axis of rotation of the cutter head (10),
- the actuating part (42, 44, 46, 48) of the adjusting device contains two annular components (46, 48) which are coupled via a thread (50) so as to be rotatable relative to one another and each have an actuating element (42, 44),
- the first annular component (46) is braced via a first rotary bearing (52) against the body (12) of the cutter head (10), and
- the second annular component (48) acts via a second rotary bearing (54) on the thrust element (56) which engages the turning-tool holders (30) eccentrically relative to the pivot axes (32).

2. A tool according to claim 1, characterised in that the thrust element (56) is a sleeve-like component and abuts parts of the turning-tool holders (30) disposed radially outside the pivot axes, and the turning-tool holders are provided with a spreading-apart device (58, 60, 62) which prestresses them into a position in which the edges of the turning tools (38) take up an end position remote from the axis of rotation.

3. A tool according to claim 2, characterised in that the spreading-apart devices contain a pressure-spring system (58) acting in each case via an axial pin (62) on a part of each holder (30) situated radially inside the pivot axis of the turning-tool holders.

4. A tool according to claim 1, 2 or 3, characterised in that the turning tools (58) are secured in the holders (30) so that in the longitudinal direction they each lie substantially in planes containing the axis of rotation and extend at an angle thereto and when the tool-holders are in the radially inwardly pivoted position, the turning-tool edges extend inwardly beyond the periphery of recess (16).

5. A tool according to any of claims 1 to 4, characterised in that the body (12), at its end remote from the turning-tool holders (30), has a threaded sleeve (14) into which a threaded journal (20) of device (22) is screwed for connecting to the rotary drive.

6. A tool according to any of the preceding claims, characterised in that the turning tools (38) are held in the tool-holders so as to be movable in the longitudinal direction.

7. A tool according to any of the preceding claims, characterised by at least three and preferably four turning-tool holders (30) symmetrically distributed around the axis of rotation of the cutter head.

8. A tool according to any of the preceding claims, characterised in that the device (22) for connecting to a rotary drive is in the form of a trueing-up trunnion (22) or drill socket (23).

9. A tool according to any of the preceding claims, characterised in that the edges of the turning tools have rounded front ends which, as seen when the turning-tool holders are inwardly pivoted, are externally adjacent an edge part extending inwardly and at an angle to the axis of rotation and are internally adjacent a surface extending substantially parallel to the axis of rotation.

## Revendications

1. Outil d'usinage, par enlèvement de copeaux, de la surface cylindrique d'une pièce à usiner, en particulier, pour enlever un cordon de soudure (68), d'un goujon (65) soudé à une extrémité, avec
- une tête porte-outils de coupe (10) raccordable à un dispositif d'entraînement en rotation, qui présente un corps (12) avec un évidement (16) pour recevoir la pièce à usiner,
- des fixations de couteaux rotatifs (30), qui sont montées mobiles sur le corps (12) de la tête porte-outils de coupe (10) pour le réglage des couteaux rotatifs (38) qu'elles contiennent, et
- un dispositif de réglage qui comporte une partie commande (42, 44, 46, 48), fixe, et une partie réglage (56, 58, 60, 62), couplée en rotation avec celle-ci et tournant avec la tête porte-outils de coupe (10), avec un élément coulissant (56) agissant sur les fixations de couteaux rotatifs (30),
caractérisé en ce que
- les fixations de couteaux rotatifs (30) sont placées autour d'axes de pivotement (32) disposés tangentiellement à l'axe de rotation de la tête porte-outils de coupe (10),
- la partie commande (42, 44, 46, 48) du dispositif de réglage comporte deux pièces constitutives annulaires (46, 48) qui sont couplées par l'intermédiaire d'un filetage (50) de façon à pouvoir tourner l'une par rapport à l'autre et sont prévues chacunes avec un organe de commande (46, 48),
- la première pièce constitutive annulaire (46) est en appui, par l'intermédiaire d'un premier palier tournant (52), contre le corps (12) de la tête porte-outils de coupe (10), et
- la deuxième pièce constitutive annulaire (48) agit sur l'élément coulissant (56) qui attaque les fixations de couteaux rotatifs (30) excentriquement par rapport aux axes de pivotement (32)

2. Outil suivant la revendication 1, caractérisé en ce que l'élément coulissant (56) est une pièce constitutive en forme de douille et est placée contre les parties des fixations de couteaux rotatifs (30) situées radialement à l'extérieur des axes de pivotement et en ce que les fixations de couteaux rotatifs sont prévus avec un dispositif d'écartement (58, 60, 62) qui met en tension les fixations de couteaux rotatifs dans une position dans laquelle les taillants des couteaux rotatifs (38) prennent une position finale éloignée de l'axe de rotation.

3. Outil suivant la revendication 2, caractérisé en ce que les dispositifs d'écartement comportent un jeu de ressorts de pression (58) qui agit chaque fois, par l'intermédiaire d'une broche (62) disposée axialement, sur une partie de chaque fixation de couteaux rotatifs (30), située, radialement, à l'intérieur de l'axe de pivotement de la fixation de couteaux rotatifs.

4. Outil suivant l'une quelconque des revendications 1, 2, ou 3, caractérisé en ce que les couteaux rotatifs (38) sont tenus dans les fixations de couteaux rotatifs (30) de façon à ce que, dans leur sens longitudinal, ils soient essentiellement chaque fois dans des plans contenant l'axe de rotation et, en même temps, obliques par rapport à celui-ci et qu'ils aboutissent, du côté intérieur, dans la position pivotée radialement vers l'intérieur des fixations de couteaux rotatifs, avec leur taillant, au dessus du pourtour de l'évidement (16).

5. Outil suivant l'une quelconque des revendications 1 à 4, caractérisé en ce que le corps (12) comporte, à son extrémité opposée aux fixations de couteaux rotatifs (30), une douille filetée (14) dans laquelle est vissé un goujon fileté (20) du dispositif (22) de liaison avec le dispositif d'entraînement en rotation.

6. Outil suivant l'une quelconque des revendications précédentes, caractérisé en ce que les couteaux rotatifs (38) sont tenus dans les fixations de couteaux rotatifs de façon à pouvoir se déplacer dans leur sens longitudinal.

7. Outil suivant l'une quelconque des revendications précédentes, caractérisé en ce qu'au moins trois, de préférence quatre, fixations de couteaux rotatifs (30) sont réparties symétriquement autour de l'axe de rotation de la tête porte-outils de coupe.

8. Outil suivant l'une quelconque des revendications précédentes, caractérisé en ce que le dispositif (22) de liaison avec le dispositif d'entraînement en rotation est constitué par un arbre tronçonné (22) ou un cône de mandrin de perçage (23).

9. Outil suivant l'une quelconque des revendications précédentes, caractérisé en ce que les taillants des outils de coupe rotatifs présentent des extrémités avant arrondies, contre lesquelles, vu lorsque les fixations de couteaux rotatifs sont pivotées vers l'intérieur) se raccordent, du côté extérieur, une partie de taillant s'étendant obliquement par rapport à l'axe de rotation et vers l'arrière, et, du côté intérieur, une surface s'étendant essentiellement parallèlement à l'axe de rotation.

0 149 994

Fig. 1

Fig. 2

Fig. 3

Fig. 4